(19) Europäisches Patentamt
European Patent Office
Office européen des brevets

(11) **EP 2 908 070 B1**

(12) **EUROPEAN PATENT SPECIFICATION**

(45) Date of publication and mention of the grant of the patent:
**05.08.2020 Bulletin 2020/32**

(21) Application number: **12886407.1**

(22) Date of filing: **10.10.2012**

(51) Int Cl.:
*F25B 1/00* (2006.01)       *F25B 13/00* (2006.01)
*F24D 3/18* (2006.01)       *F25B 25/00* (2006.01)
*F24D 19/10* (2006.01)       *F24F 3/06* (2006.01)

(86) International application number:
**PCT/JP2012/076248**

(87) International publication number:
**WO 2014/057550 (17.04.2014 Gazette 2014/16)**

(54) **AIR CONDITIONING DEVICE**

KLIMAANLAGENVORRICHTUNG

DISPOSITIF DE CLIMATISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.08.2015 Bulletin 2015/34**

(73) Proprietor: **Mitsubishi Electric Corporation Tokyo 100-8310 (JP)**

(72) Inventors:
• **HONDA, Takayoshi**
  **Tokyo 100-8310 (JP)**
• **SHIMAMOTO, Daisuke**
  **Tokyo 100-8310 (JP)**
• **MORIMOTO, Osamu**
  **Tokyo 100-8310 (JP)**

(74) Representative: **Pfenning, Meinig & Partner mbB Patent- und Rechtsanwälte Theresienhöhe 11a 80339 München (DE)**

(56) References cited:
WO-A1-2010/050003       WO-A1-2010/113296
JP-A- 2006 170 597       US-A1- 2011 146 339
US-A1- 2012 006 050       US-A1- 2012 131 948

**Description**

Technical Field

The present invention relates to an air-conditioning apparatus such as a multi-air-conditioning apparatus for buildings.

Background Art

In a multi-air-conditioning apparatus for buildings, which is a typical air-conditioning apparatus, a refrigerant circulates between an outdoor unit serving as a heat source device disposed outdoors and an indoor unit disposed indoors so that cooling energy or heating energy is conveyed into a room. Hydrofluorocarbon (HFC) refrigerant is often used as a refrigerant, and the use of a natural refrigerant such as $CO_2$ has also been proposed.

In a chiller which typifies the conventional air-conditioning apparatus as well, a heat source device located outdoors generates cooling energy or heating energy, and a heat exchanger disposed in an outdoor unit transmits the cooling energy or heating energy to a heat medium such as water or antifreeze (see, for example, Patent Literature 1). In such a chiller, cooling energy or heating energy transmitted to the heat medium is conveyed to, for example, a fan coil unit or a panel heater serving as an indoor unit to enable cooling or heating.

In the chiller, heat is exchanged between a refrigerant and water on the outside, and the water having undergone heat exchange is conveyed to the indoor unit. Thus, considerable power is necessary for conveying water, resulting in deterioration of energy saving performance.

In addition, in the chiller, when a pump in a water circuit is kept stopped for a long period of time, cooling energy of the refrigerant in the refrigerant circuit is continuously transmitted to the water near the heat exchanger, so the water is likely to freeze in the pipe.

In another proposed air-conditioning apparatus, a refrigerant circulation circuit is extended to a portion near the inside of the room. If such an air-conditioning apparatus employs HCF refrigerant, a refrigerant such as HFC is conveyed to the indoor unit. Thus, damage to a pipe in the indoor unit, for example, causes leakage of a refrigerant into the room, resulting in deterioration of the indoor environments.

In view of this, a proposed air-conditioning apparatus includes pipes configured to prevent a refrigerant such as HFC from circulating near an indoor unit in order to attain excellent energy saving performance, and prevent freezing of a heat medium (see, for example, Patent Literature 2).

The technique of Patent Literature 2 includes an anti-freezing operation mode for preventing freezing of water in a heat medium pipe. In the anti-freezing operation mode, when the temperature detected by a temperature sensor decreases to a set temperature or lower while a compressor or a pump is kept stopped, an outdoor unit starts in a heating mode. Then, in this operation mode, heat is exchanged between a high-temperature high-pressure refrigerant and the heat medium so as to prevent freezing of the heat medium in the heat medium pipe.

US 2012/0131948 A1 describes an air conditioning apparatus that is provided with a refrigerant cycle through which a heat-source-side refrigerant is to be circulated, a first heat medium channel to which a pump is connected and through which a heat medium such as water, an anti-freezing solution or the like is circulated, a first heat medium channel to which a pump is connected and through which a heat medium is circulated, and a plurality of use-side heat exchangers connected to the first heat medium channels. Also, the first heat medium channels are connected to the suction side of a pump through a pump flow direction switching device, and the first heat medium channels are connected to the discharge side of the pump through a pump flow direction switching device. By controlling opening degrees of the pump flow direction switching devices, the first heat medium channel which communicates with the pump is selected.

US 2011/0146339 A1 discloses an air-conditioning apparatus, a heat source side heat exchanger, intermediate heat exchangers, and use side heat exchangers which are formed in separate bodies respectively and adapted to be disposed at separate locations one another, wherein an anti-freezing operation mode is provided in which, when the detection temperatures of the temperature sensors become equal to or lower than a set temperature Ts while a compressor or pumps are stopped, the heat medium is circulated to perform anti-freezing of the heat medium.

Citation List

Patent Literature

Patent Literature 1: Japanese Unexamined Patent Application Publication No. 2003-343936 (see, for example, Fig. 1)
Patent Literature 2: WO2010/050003A1 (see, for example, claim 1 and Fig. 1)

# EP 2 908 070 B1

## Summary of Invention

### Technical Problem

In the technique of Patent Literature 2, suppose, for example, the temperature detected by the temperature sensor decreases to the set temperature or lower and the apparatus shifts to an anti-freezing operation mode while the compressor is kept stopped in a cooling mode. In this case, a heating mode is performed to heat the heat medium, thereby suppressing freezing of the heat medium.

In transition from the anti-freezing operation mode to the cooling mode again, if a heat medium temperature necessary for achieving a target indoor temperature is greatly different from a heat medium temperature at the start of the compressor in the cooling mode, air providing a feeling of draft (a feeling of excessive cold or heat) is disadvantageously supplied into the room, resulting in the possibility of impaired comfort of the user.

Since wind providing a feeling of draft is not supplied into the room, if an operation of reducing the amount of air blowing from an indoor unit is performed for a long period of time, the time taken for the room to reach a target temperature may increase.

The present invention has been made in order to solve the above-mentioned problems, and has as its object to provide an air-conditioning apparatus that can supply air providing little feeling of draft (a feeling of cold or heat) to the room immediately after the start of operation and reduce an increase in time taken for the room to reach a target indoor temperature.

### Solution to Problem

An air-conditioning apparatus according to the present invention is defined in claim 1. The air-conditioning apparatus includes a refrigeration cycle circuit including a compressor, a heat source side heat exchanger, at least one expansion valve, and an intermediate heat exchanger connected to one another via refrigerant pipes, the intermediate heat exchanger being configured to exchange heat between a refrigerant and a heat medium, a heat medium circulation circuit including the intermediate heat exchanger, a pump configured to convey the heat medium, and a use side heat exchanger connected to one another via heat medium pipes, a fan provided to the use side heat exchanger and a temperature sensor configured to detect the temperature of the heat medium. The apparatus further includes a control device configured to control the compressor and the pump, wherein the control device is configured to perform an air conditioning operation mode including a cooling operation mode and heating operation mode, and a heat medium temperature adjustment operation mode in which when the detection result of the heat medium temperature falls outside a predetermined temperature range while the compressor and the pump are temporarily kept stopped, the compressor and the pump are driven to cause the intermediate heat exchanger to exchange heat between the refrigerant and the heat medium so that the heat medium is heated or cooled to have a temperature that falls within the predetermined temperature range, characterized in that the control device is further configured to control the fan, and in the heat medium temperature adjustment operation mode, keep the fan stopped or operate the fan with a reduced amount of air.

### Advantageous Effects of Invention

In the air-conditioning apparatus of the present invention, even when the operations of the compressor and the pump are temporarily stopped so that the temperature of the heat medium varies and falls outside the predetermined temperature range because of factors associated with, for example, outdoor air, the compressor and the pump are driven to allow the intermediate heat exchanger to exchange heat between the refrigerant and the heat medium so that the temperature of the heat medium falls within the predetermined temperature range.

With this arrangement, the air-conditioning apparatus of the present invention can supply wind with little feeling of draft immediately after the start of operation and reduce an increase in time taken for the room to reach a target indoor temperature.

### Brief Description of Drawings

[Fig. 1] Fig. 1 illustrates an example of the overall structure of an air-conditioning apparatus according to an embodiment of the present invention.
[Fig. 2] Fig. 2 illustrates another example of the overall structure of the air-conditioning apparatus different from the example of Fig. 1.
[Fig. 3] Fig. 3 illustrates an example of a circuit diagram for a refrigerant and a heat medium in the air-conditioning apparatus of the embodiment.

[Fig. 4] Fig. 4 is a circuit diagram illustrating flow of a refrigerant and a heat medium in a cooling only operation.

[Fig. 5] Fig. 5 is a circuit diagram illustrating flow of a refrigerant and a heat medium in a heating only operation.

[Fig. 6] Fig. 6 is a circuit diagram illustrating flow of a refrigerant and a heat medium in a cooling main operation.

[Fig. 7] Fig. 7 is a circuit diagram illustrating flow of a refrigerant and a heat medium in a heating main operation.

[Fig. 8] Fig. 8 is a flowchart showing operation in a heat medium temperature adjustment operation mode.

[Fig. 9] Fig. 9 is a flowchart showing operation in a heat medium temperature adjustment operation mode different from that shown in Fig. 8.

Description of Embodiments

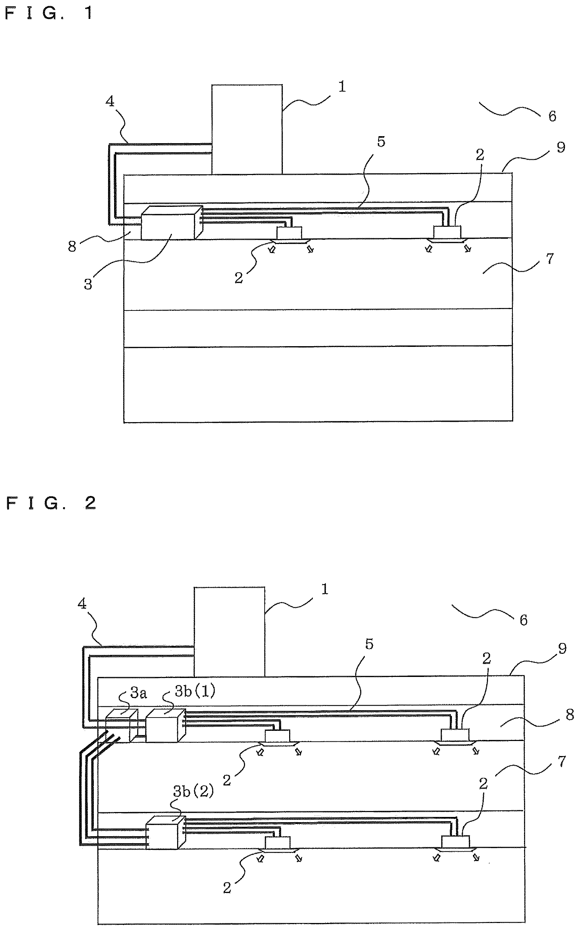

An embodiment of an air-conditioning apparatus according to the present invention will be described with reference to the accompanying drawings. The following embodiment does not limit the present invention. In the attached drawings including Fig. 1, the size relationship among components may be different from those in an actual relationship.

The air-conditioning apparatus of this embodiment can supply air providing little feeling of draft to an air-conditioned space (e.g., a room, a room of a building, or a warehouse) immediately after the start of operation, and has an operation mode (a heat medium temperature adjustment operation mode) for reducing an increase in time taken for the air-conditioned space to reach a target indoor temperature.

<Configuration>

Fig. 1 illustrates an example of the overall structure of an air-conditioning apparatus according to an embodiment.

The air-conditioning apparatus of this embodiment includes a heat source device (an outdoor unit) 1, an indoor unit 2 provided in, for example, an indoor air conditioner, and a relay unit 3 separated from the outdoor unit 1 and located in, for example, a non-air-conditioned space 8.

The heat source device 1 is connected to the relay unit 3 by refrigerant pipes 4, and a refrigerant exhibiting a two-phase change or a refrigerant (a primary medium) in supercritical state circulates through them. The relay unit 3 is connected to the indoor unit 2 by heat medium pipes 5, and a heat medium (a secondary medium) such as water, brine, or antifreeze circulates through them. The relay unit 3 includes, for example, intermediate heat exchangers 15a and 15b to, for example, exchange heat between the refrigerant supplied from the heat source device 1 and the heat medium supplied from the indoor unit 2.

The heat source device 1 is generally disposed in an outdoor space 6 that is outside a construction 9 such as a building. The indoor unit 2 is disposed in an indoor space 7 such as a room inside the building construction 9 at a position at which the indoor unit 2 can convey heated or cooled air.

The relay unit 3 is encased in a housing different from housings accommodating the heat source device 1 and the indoor unit 2, and is connected to the heat source device 1 and the indoor unit 2 by the refrigerant pipes 4 and the heat medium pipes 5 so that the relay unit 3 can be located at a position different from the outdoor space 6 and the indoor space 7. Referring to Fig. 1, the relay unit 3 is disposed in the non-air-conditioned space 8, such as a space above a ceiling, which is a space located inside the construction 9 but different from the indoor space 7. The relay unit 3 can be disposed in, for example, a common area including, for example, an elevator.

The heat source device 1 and the relay unit 3 are connected to each other by two refrigerant pipes 4. The relay unit 3 and each indoor unit 2 are connected to each other by two heat medium pipes 5. Such connection using two pipes facilitates construction of the air-conditioning apparatus.

Fig. 2 illustrates another example of the overall structure of the air-conditioning apparatus different from the example of Fig. 1. As illustrated in Fig. 2, the air-conditioning apparatus of this embodiment may include a plurality of relay units 3. More specifically, the relay units 3 include a main-relay unit 3a and two sub-relay units 3b(1) and 3b(2) branching from the main-relay unit 3a. In this manner, the plurality of sub-relay units 3b can be connected to the single main-relay unit 3a. In this structure, three pipes are used to connect the main-relay unit 3a and the sub-relay units 3b.

Referring to Figs. 1 and 2, the indoor unit 2 is of the ceiling cassette type as an example, but the present invention is not limited to this type. More specifically, the indoor unit 2 is not limited to the ceiling cassette type, and may adopt the ceiling concealed type or the ceiling suspension type as long as heated or cooled air can be blown to the indoor space 7 directly or via, for example, a duct.

In the above-described example, although the heat source device 1 is placed in the outdoor space 6 outside the construction 9, the present invention is not limited to this example. The heat source device 1 may be placed in an enclosed space such as a machinery room having, for example, a ventilation opening. The heat source device 1 may also be placed inside the construction 9 to release waste heat to the outside of the construction 9 through an exhaust duct, or may use a water-cooled heat source device as located in the construction 9.

The relay unit 3 can also be placed near the heat source device 1. In this case, however, if the distance from the relay unit 3 to the indoor unit 2 is too long, a large amount of power is needed to convey the heat medium, and thus the energy saving performance deteriorates. For this reason, when the relay unit 3 is located near the heat source device 1, the position of the heat source device 1 is preferably determined such that the distance from the relay unit 3 to the indoor unit 2 is not too long.

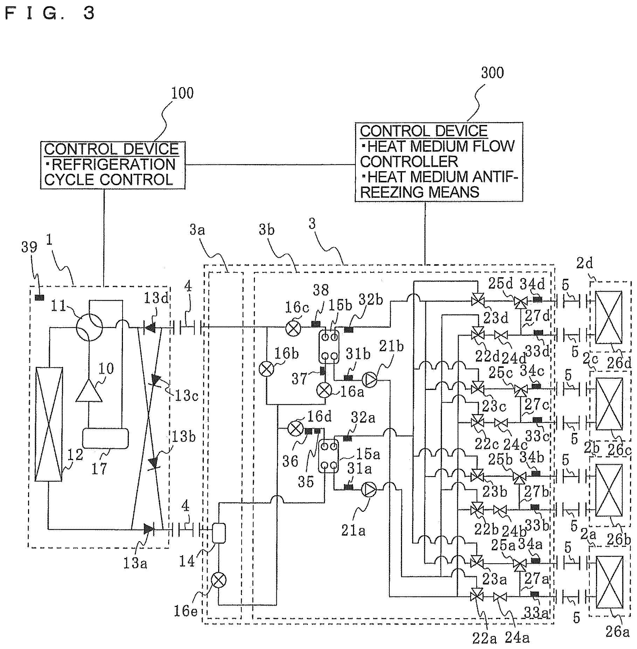

The structure of the air-conditioning apparatus illustrated in Figs. 1 and 2 will be specifically described. Fig. 3 illustrates an example of a circuit diagram for a refrigerant and a heat medium in the air-conditioning apparatus of the embodiment. As illustrated in Fig. 3, the air-conditioning apparatus includes the heat source device 1, the indoor unit 2, and the relay unit 3 described with reference to Figs. 1 and 2. In the following description, the relay unit 3 of the air-conditioning apparatus of this embodiment includes one main-relay unit 3a and one sub-relay unit 3b illustrated in Fig. 2.

The heat source device 1 includes a compressor 10 that compresses and discharges a refrigerant; a four-way valve 11 that switches the flow of the refrigerant; a heat source side heat exchanger 12 that serves as a condenser (a radiator) or an evaporator; check valves 13a, 13b, 13c, and 13d that can uniform the direction in which the refrigerant flows, irrespective of whether the operation mode is a cooling operation or a heating operation; and an accumulator 17 storing an excess refrigerant.

The indoor unit 2 includes use side heat exchangers 26a to 26d serving as evaporators or condensers.

The relay unit 3 includes the main-relay unit 3a and the sub-relay unit 3b. The main-relay unit 3a includes a gas-liquid separator 14 that separates the refrigerant into gas and liquid refrigerants, and an expansion valve (e.g., an electronic expansion valve) 16e.

The sub-relay unit 3b includes the intermediate heat exchangers 15a and 15b for exchanging heat between the refrigerant and a heat medium; expansion valves (e.g., electronic expansion valves) 16a to 16d for reducing the pressure of the refrigerant; pumps 21a and 21b for conveying the heat medium; and channel switching valves 22a to 22d and channel switching valves 23a to 23d such as three-way valves for switching the flow of the heat medium.

In the sub-relay unit 3b, stop valves 24a to 24d that can open and close channels are connected to the heat medium pipes 5 on the sides of the inlets of the use side heat exchangers 26a to 26d, and flow control valves 25a to 25d that can adjust the flow rate of the heat medium are connected to the heat medium pipes 5 on the sides of the outlets of the use side heat exchangers 26a to 26d.

The sub-relay unit 3b further includes bypasses 27a to 27d connecting the inlets and the outlets of the use side heat exchangers 26a to 26d. The bypasses 27a to 27d connect the flow control valves 25a to 25d to the heat medium pipes 5 provided between the channel switching valves 23a to 23d and the use side heat exchangers 26a to 26d.

The channel switching valves 22a to 22d and 23a to 23d are provided for the inlet and outlet channels to the use side heat exchangers 26a to 26d. More specifically, the channel switching valves 22a to 22d switch the inlet channels of intermediate heat exchangers to select either intermediate heat exchanger to be connected, and the channel switching valves 23a to 23d switch the outlet channels of the intermediate heat exchangers to select either intermediate heat exchanger to be connected.

In the embodiment, the channel switching valves 22a to 22d switch the inlet channels of the intermediate heat exchangers 15a and 15b to select either of the intermediate heat exchangers 15a and 15b to be connected, and the channel switching valves 23a to 23d switch the outlet channels of the intermediate heat exchangers 15a and 15b to select either of the intermediate heat exchangers 15a and 15b to be connected.

The stop valves 24a to 24d are located at the inlets of the use side heat exchangers 26a to 26d, and the flow control valves 25a to 25d are provided at the outlets of the use side heat exchangers 26a to 26d. The inlets and outlets of the use side heat exchangers 26a to 26d are connected to each other by the bypasses 27a to 27d through the flow control valves 25a to 25d.

The sub-relay unit 3b includes first to seventh temperature sensors and pressure sensors, as will be described below.

The sub-relay unit 3b includes temperature sensors (first temperature sensors) 31a and 31b for detecting the temperatures of the heat medium at the outlets of the intermediate heat exchangers 15a and 15b; temperature sensors (second temperature sensors) 32a and 32b for detecting the temperatures of the heat medium at the inlets of the intermediate heat exchangers 15a and 15b; temperature sensors (third temperature sensors) 33a to 33d for detecting the temperatures of the heat medium at the inlets of the use side heat exchangers 26a to 26d; and temperature sensors (fourth temperature sensors) 34a to 34d for detecting the temperatures of the heat medium at the outlets of the use side heat exchangers 26a to 26d.

The sub-relay unit 3b includes a temperature sensor (a fifth temperature sensor) 35 for detecting the temperature of the refrigerant at the outlet of the intermediate heat exchanger 15a; a temperature sensor (a sixth temperature sensor) 37 for detecting the temperature of the refrigerant at the inlet of the intermediate heat exchanger 15b; and a temperature sensor (a seventh temperature sensor) 38 for detecting the temperature of the refrigerant at the outlet of the intermediate heat exchanger 15b.

The sub-relay unit 3b further includes a pressure sensor 36 for detecting the pressure of the refrigerant at the outlet of the intermediate heat exchanger 15a; and an outdoor-air temperature sensor 39, located in the outdoor unit 1, for detecting an outdoor-air temperature.

These temperature sensors and pressure sensors are not specifically limited, and can be various types of thermometers, temperature sensors, pressure gauges, and pressure sensors.

The air-conditioning apparatus of this embodiment includes a refrigeration cycle circuit including the compressor 10, the four-way valve 11, the heat source side heat exchanger 12, the check valves 13a to 13d, the gas-liquid separator 14, the expansion valves 16a to 16e, the intermediate heat exchangers 15a and 15b, and the accumulator 17 connected to each other via the refrigerant pipes.

The air-conditioning apparatus of this embodiment also includes a heat medium circulation circuit (to be also referred to as a first heat medium circulation circuit hereinafter) including the intermediate heat exchanger 15a, the pump 21a, the channel switching valves 22a to 22d, the stop valves 24a to 24d, the use side heat exchangers 26a to 26d, the flow control valves 25a to 25d, and the channel switching valves 23a to 23d connected to each other via the heat medium pipes. The air-conditioning apparatus of this embodiment also includes a heat medium circulation circuit (to be also referred to as a second heat medium circulation circuit hereinafter) including the intermediate heat exchanger 15b, the pump 21b, the channel switching valves 22a to 22d, the stop valves 24a to 24d, the use side heat exchangers 26a to 26d, the flow control valves 25a to 25d, and the channel switching valves 23a to 23d connected to each other via the heat medium pipes.

As illustrated in Fig. 3, in the first heat medium circulation circuit, the use side heat exchangers 26a to 26d are connected in parallel to the intermediate heat exchanger 15a. In the second heat medium circulation circuit as well, the use side heat exchangers 26a to 26d are also connected in parallel to the intermediate heat exchanger 15b.

The heat source device 1 includes a control device 100 that controls components constituting the heat source device 1 to cause the heat source device 1 to operate as a so-called outdoor unit. The relay unit 3 includes a control device 300 that controls components constituting the relay unit 3 to cause the relay unit 3 to perform the following operations. The control devices 100 and 300 are implemented using, for example, microcomputers, and are connected to each other to be capable of communication with each other. The operation of the air-conditioning apparatus in each operation mode will now be described.

<Cooling Only Operation>

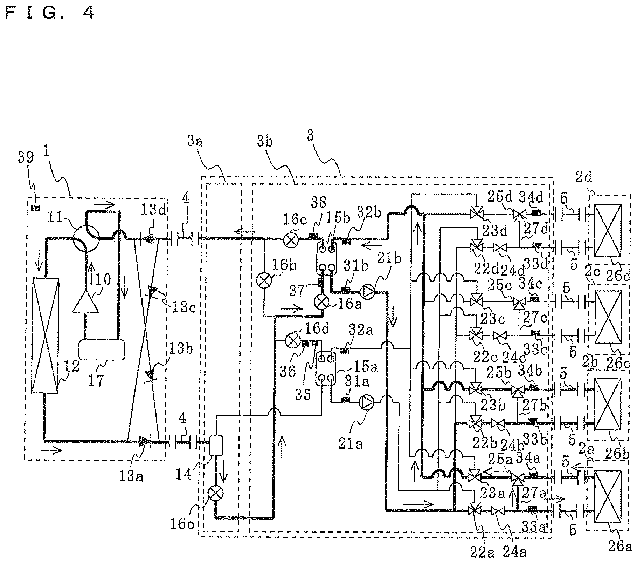

Fig. 4 is a circuit diagram illustrating flow of the refrigerant and the heat medium in a cooling only operation. In the cooling only operation, the refrigerant is compressed by the compressor 10, turns into a high-temperature high-pressure gas refrigerant, and enters the heat source side heat exchanger 12 through the four-way valve 11. The refrigerant is condensed and liquefied in the heat source side heat exchanger 12, flows out of the heat source device 1 through the check valve 13a, and then flows into the relay unit 3 through the refrigerant pipes 4. In the relay unit 3, the refrigerant enters the gas-liquid separator 14 and is introduced into the intermediate heat exchanger 15b through the expansion valves 16e and 16a. In this process, the refrigerant is expanded by the expansion valve 16a and turns into a low-temperature low-pressure two-phase refrigerant, and the intermediate heat exchanger 15b serves as an evaporator. In the intermediate heat exchanger 15b, the refrigerant turns into a low-temperature low-pressure gas refrigerant, flows out of the relay unit 3 through the expansion valve 16c, and flows into the heat source device 1 again through the refrigerant pipes 4. In the heat source device 1, the refrigerant passes through the check valve 13d and is drawn by suction into the compressor 10 through the four-way valve 11 and the accumulator 17. At this time, the expansion valves 16b and 16d have opening degrees small enough to prevent flow of the refrigerant, and the expansion valve 16c is fully opened so that no pressure loss occurs.

A motion of a secondary heat medium (e.g., water or antifreeze) will now be described. In the intermediate heat exchanger 15b, cooling energy of a primary refrigerant is transmitted to a secondary heat medium, and the cooled heat medium is caused to flow through pipes on the secondary side by the pump 21b. The heat medium having flowed out of the pump 21b passes sequentially through the channel switching valves 22a to 22d and the stop valves 24a to 24d, and flows into the use side heat exchangers 26a to 26d and the flow control valves 25a to 25d. At this time, the flow control valves 25a to 25d operate such that only a part of the heat medium in an amount necessary for providing an air-conditioning load required in a room flows in the use side heat exchangers 26a to 26d, and the remaining part of the heat medium passes through the bypasses 27a to 27d and does not contribute to heat exchange. A heat medium stream having passed through the bypasses 27a to 27d merges with a heat medium stream having passed through the use side heat exchangers 26a to 26d, flows into the intermediate heat exchanger 15b through the channel switching valves 23a to 23d, and is drawn by suction into the pump 21b again.

The air-conditioning load required in the room can be provided by controlling the flow rate of the heat medium passing through the use side heat exchangers 26a to 26d by the control device 300 so that the differences between the temperatures detected by the third temperature sensors 33a to 33d and those detected by the fourth temperature sensors 34a to 34d are kept at a predetermined target value. The same applies to a heating only operation, a cooling main operation, and a heating main operation.

Since no heat medium needs to be supplied to the use side heat exchangers (including thermo-off) having no thermal loads, the channels are closed by the stop valves 24a to 24d so that no heat medium flows into these use side heat exchangers. Referring to Fig. 4, since the use side heat exchangers 26a and 26b have thermal loads, the heat medium is supplied into them. On the other hand, the use side heat exchangers 26c and 26d have no thermal loads, and thus the corresponding stop valves 24c and 24d are closed.

<Heating Only Operation>

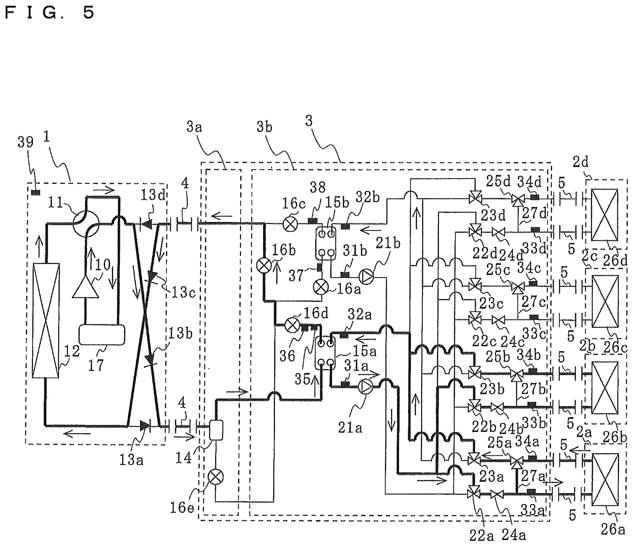

Fig. 5 is a circuit diagram illustrating flow of the refrigerant and the heat medium in a heating only operation. In the heating only operation, the refrigerant is compressed by the compressor 10, turns into a high-temperature high-pressure gas refrigerant, flows out of the heat source device 1 sequentially through the four-way valve 11 and the check valve 13b, and then flows into the relay unit 3 through the refrigerant pipes 4. In the relay unit 3, the refrigerant is guided to the intermediate heat exchanger 15a through the gas-liquid separator 14, condensed and liquefied in the intermediate heat exchanger 15a, and flows out of the relay unit 3 through the expansion valves 16d and 16b. In this process, the refrigerant is expanded by the expansion valve 16b, turns into a low-temperature low-pressure two-phase refrigerant, and flows again into the heat source device 1 through the refrigerant pipes 4. In the heat source device 1, the refrigerant passes through the check valve 13c and is introduced into the heat source side heat exchanger 12, and the heat source side heat exchanger 12 serves as an evaporator. Then, the refrigerant turns into a low-temperature low-pressure gas refrigerant and is drawn by suction into the compressor 10 through the four-way valve 11 and the accumulator 17. At this time, the expansion valve 16e and the expansion valve 16a or 16c have opening degrees small enough to prevent flow of the refrigerant.

A motion of a secondary heat medium (e.g., water or antifreeze) will now be described. In the intermediate heat exchanger 15a, heating energy of a primary refrigerant is transmitted to a secondary heat medium, and the heated heat medium is caused to flow through pipes on the secondary side by the pump 21a. The heat medium having flowed out of the pump 21a passes sequentially through the channel switching valves 22a to 22d and the stop valves 24a to 24d, and flows into the use side heat exchangers 26a to 26d and the flow control valves 25a to 25d. At this time, the flow control valves 25a to 25d operate such that only a part of the heat medium in an amount necessary for providing an air-conditioning load required in a room flows in the use side heat exchangers 26a to 26d, and the remaining part of the heat medium passes through the bypasses 27a to 27d and does not contribute to heat exchange. A heat medium stream having passed through the bypasses 27a to 27d merges with a heat medium stream having passed through the use side heat exchangers 26a to 26d, flows into the intermediate heat exchanger 15a through the channel switching valves 23a to 23d, and is drawn by suction into the pump 21a again. The air-conditioning load required in the room can be provided by a control operation in which the differences between the temperatures detected by the third temperature sensors 33a to 33d and those detected by the fourth temperature sensors 34a to 34d are kept at a predetermined target value.

In this process, since no heat medium needs to be supplied to the use side heat exchangers (including thermo-off) having no thermal loads, the channels are closed by the stop valves 24a to 24d so that no heat medium flows into these use side heat exchangers. Referring to Fig. 5, since the use side heat exchangers 26a and 26b have thermal loads, the heat medium flows through them. On the other hand, the use side heat exchangers 26c and 26d have no thermal loads, and thus the corresponding stop valves 24c and 24d are closed.

<Cooling Main Operation>

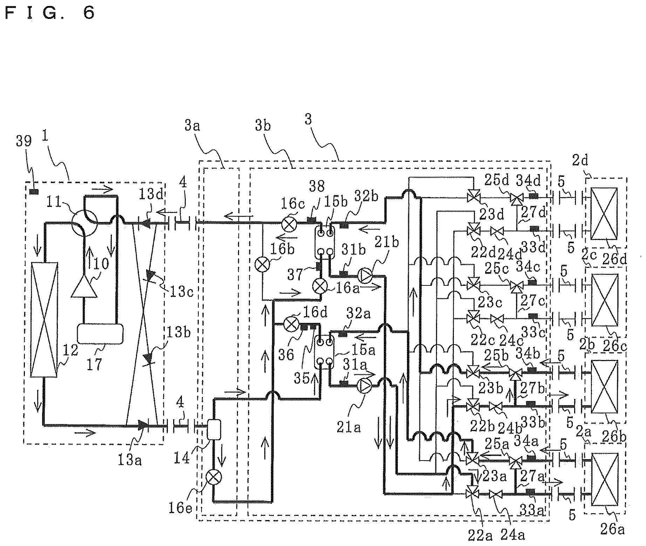

Fig. 6 is a circuit diagram illustrating flow of the refrigerant and the heat medium in a cooling main operation. In the cooling main operation, the refrigerant is compressed by the compressor 10, turns into a high-temperature high-pressure gas refrigerant, and is introduced into the heat source side heat exchanger 12 through the four-way valve 11. Then, the gas refrigerant is condensed into a two-phase refrigerant, which flows out of the heat source side heat exchanger 12, flows out of the heat source device 1 through the check valve 13a, and flows into the relay unit 3 through the refrigerant pipes 4. In the relay unit 3, the refrigerant enters the gas-liquid separator 14 where the two-phase refrigerant is separated into gas and liquid refrigerants. The gas refrigerant is introduced into the intermediate heat exchanger 15a, and condensed and liquefied in the intermediate heat exchanger 15a, and passes through the expansion valve 16d. On the other hand, the liquid refrigerant separated by the gas-liquid separator 14 flows into the expansion valve 16e, is condensed and liquefied in the intermediate heat exchanger 15a, and merges with the liquid refrigerant having passed through the expansion valve 16d. The refrigerant then passes through the expansion valve 16a and is introduced into the intermediate heat exchanger 15b. In this process, the refrigerant is expanded by the expansion valve 16a and turns into a low-temperature low-pressure two-phase refrigerant, and the intermediate heat exchanger 15b serves as an evaporator. The refrigerant turns into a low-temperature low-pressure gas refrigerant in the intermediate heat exchanger 15b, flows out of the relay unit 3 through the expansion valve 16c, and flows again into the heat source device 1 through the refrigerant pipes 4. In the heat source device 1, the refrigerant passes through the check valve 13d and is drawn by suction into the compressor 10 through the four-way valve 11 and the accumulator 17. At this time, the expansion valve 16b has an opening degree small enough to prevent flow of the refrigerant, and the expansion valve 16c is fully opened so that no pressure loss occurs.

A motion of a secondary heat medium (e.g., water or antifreeze) will now be described. In the intermediate heat exchanger 15a, heating energy of a primary refrigerant is transmitted to the secondary heat medium, and the heated heat medium is caused to flow through pipes on the secondary side by the pump 21a. In the intermediate heat exchanger 15b, cooling energy of the primary refrigerant is transmitted to the secondary heat medium, and the cooled heat medium is caused to flow through pipes on the secondary side by the pump 21b. The heat medium streams having flowed out of the pumps 21a and 21b merge into one heat medium stream, which passes sequentially through the channel switching valves 22a to 22d and the stop valves 24a to 24d and flows into the use side heat exchangers 26a to 26d and the flow control valves 25a to 25d. At this time, the flow control valves 25a to 25d operate such that only a part of the heat medium in an amount necessary for providing an air-conditioning load required in a room flows in the use side heat exchangers 26a to 26d, and the remaining part of the heat medium passes through the bypasses 27a to 27d and does not contribute to heat exchange. A heat medium stream having passed through the bypasses 27a to 27d merges with a heat medium stream having passed through the use side heat exchangers 26a to 26d, and the heat medium passes through the channel switching valves 23a to 23d. Then, the hot heat medium flows into the intermediate heat exchanger 15a and returns to the pump 21a, while the cold heat medium flows into the intermediate heat exchanger 15b and returns to the pump 21b. In this process, upon the operation of the channel switching valves 22a to 22d and 23a to 23d, the hot and cold heat media are not mixed and are individually introduced into the use side heat exchangers 26a to 26d having heating loads and cooling loads. The air-conditioning load required in the room is provided by a control operation in which the differences between the temperatures detected by the third temperature sensors 33a to 33d and those detected by the fourth temperature sensors 34a to 34d are kept at a target value.

Fig. 6 illustrates a state in which a heating energy load is generated in the use side heat exchanger 26a, and a cooling energy load is generated in the use side heat exchanger 26b.

In this case, since it is unnecessary to supply a heat medium to the use side heat exchangers (including thermo-off) having no thermal loads, the channels are closed by the stop valves 24a to 24d so that no heat medium flows into these use side heat exchangers. Referring to Fig. 6, since the use side heat exchangers 26a and 26b have thermal loads, the heat medium flows through them. On the other hand, the use side heat exchangers 26c and 26d have no thermal loads, and thus the corresponding stop valves 24c and 24d are closed.

<Heating Main Operation>

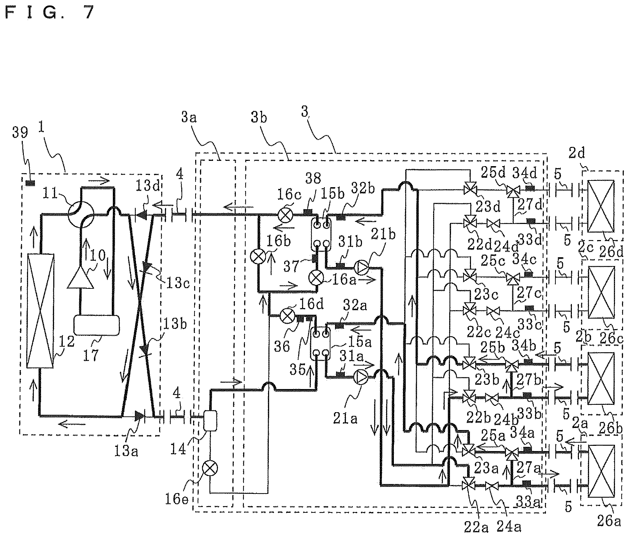

Fig. 7 is a circuit diagram illustrating flow of a refrigerant and a heat medium in a heating main operation. In the heating main operation, the refrigerant is compressed by the compressor 10, turns into a high-temperature high-pressure gas refrigerant, flows out of the heat source device 1 through the four-way valve 11 and the check valve 13b, and flows into the relay unit 3 through the refrigerant pipes 4. In the relay unit 3, the refrigerant is introduced into the intermediate heat exchanger 15a through the gas-liquid separator 14, and is condensed and liquefied in the intermediate heat exchanger 15a. Thereafter, the refrigerant having passed through the expansion valve 16d is divided into a channel passing through the expansion valve 16a and a channel passing through the expansion valve 16b. The refrigerant having passed through the expansion valve 16a is expanded by the expansion valve 16a, turns into a low-temperature low-pressure two-phase refrigerant, and flows into the intermediate heat exchanger 15b, and the intermediate heat exchanger 15b serves as an evaporator. The refrigerant having flowed out of the intermediate heat exchanger 15b evaporates into a gas refrigerant, and passes through the expansion valve 16c. On the other hand, the refrigerant having passed through the expansion valve 16b is expanded by the expansion valve 16b, turns into a low-temperature low-pressure two-phase refrigerant, merges with the refrigerant having passed through the intermediate heat exchanger 15b and the expansion valve 16c, and turns into a low-temperature low-pressure refrigerant with a higher quality of vapor. The resulting refrigerant flows out of the relay unit 3 and flows again into the heat source device 1 through the refrigerant pipes 4. In the heat source device 1, the refrigerant is introduced into the heat source side heat exchanger 12 through the check valve 13c, and the heat source side heat exchanger 12 serves as an evaporator. In the heat source side heat exchanger 12, therefore, the low-temperature low-pressure two-phase refrigerant is evaporated into a gas refrigerant and is drawn by suction into the compressor 10 through the four-way valve 11 and the accumulator 17. At this time, the expansion valve 16e has an opening degree small enough to prevent flow of the refrigerant.

A motion of a secondary heat medium (e.g., water or antifreeze) will now be described. In the intermediate heat exchanger 15a, heating energy of a primary refrigerant is transmitted to a secondary heat medium, and a heated heat medium is caused to flow through pipes on the secondary side by the pump 21a. In the intermediate heat exchanger 15b, cooling energy of a primary refrigerant is transmitted to the secondary heat medium, and the cooled heat medium is caused to flow through pipes on the secondary side by the pump 21b. The heat medium streams having flowed out of the pumps 21a and 21b pass through the channel switching valves 22a to 22d and the stop valves 24a to 24d, and flow into the use side heat exchangers 26a to 26d and the flow control valves 25a to 25d. At this time, the flow control valves 25a to 25d operate such that only a part of the heat medium in an amount necessary for providing an air-conditioning load required in the room flows in the use side heat exchangers 26a to 26d, and the remaining part of the heat medium passes through the bypasses 27a to 27d and does not contribute to heat exchange. A heat medium stream having passed through the bypasses 27a to 27d merges with a heat medium stream having passed through the use side heat exchangers 26a to 26d, and the heat medium passes through the channel switching valves 23a to 23d. Then, the hot heat medium flows into the intermediate heat exchanger 15a and returns to the pump 21a, while the cold heat medium flows into the intermediate heat exchanger 15b and returns to the pump 21b. In this process, upon the operation of the channel switching valves 22a to 22d and 23a to 23d, the hot and cold heat media are not mixed and individually introduced into the use side heat exchangers 26a to 26d having heating loads and cooling loads. The air-conditioning load required in the room is provided by a control operation in which the differences between the temperatures detected by the third temperature sensors 33a to 33d and those detected by the fourth temperature sensors 34a to 34d are kept at a target value.

Fig. 7 illustrates a state in which a heating energy load is generated in the use side heat exchanger 26a, and a cooling energy load is generated in the use side heat exchanger 26b.

In this case, since it is unnecessary to supply a heat medium to the use side heat exchangers (including thermo-off) having no thermal loads, the channels are closed by the stop valves 24a to 24d so that no heat medium flows to these use side heat exchangers. Referring to Fig. 7, since the use side heat exchangers 26a and 26b have thermal loads, the heat medium flows through them. On the other hand, the use side heat exchangers 26c and 26d have no thermal loads, and thus the corresponding stop valves 24c and 24d are closed.

As described above, when heating loads are generated in the use side heat exchangers 26a to 26d, the corresponding channel switching valves 22a to 22d and 23a to 23d are switched to channels connected to the intermediate heat exchanger 15a for heating. When cooling loads are generated in the use side heat exchangers 26a to 26d, the corresponding channel switching valves 22a to 22d and 23a to 23d are switched to channels connected to the intermediate heat exchanger 15b for cooling. With this operation, the indoor unit 2 can freely perform a heating operation and a cooling operation.

The channel switching valves 22a to 22d and 23a to 23d may adopt any type such as three-way valves that can switch three-way channels or a combination of, for example, two types of shut-off valves that open and close two-way channels, for example, as long as the channel switching valves 22a to 22d and 23a to 23d can switch the channels. The channel switching valve may also be implemented using a valve such as a mixing valve of the stepping-motor drive type that can change the flow rate of a three-way channel or a combination of two valves such as electronic expansion valves that can change the flow rate of two-way channels. In this case, it is possible to prevent a water hammer produced upon sudden opening or closing of a channel.

The thermal load in each of the use side heat exchangers 26a to 26d is expressed as Equation (1), and obtained by multiplying the flow rate, density, and specific heat at constant pressure of a heat medium and the difference between the temperatures of the heat medium at the inlet and outlet of each of the use side heat exchangers 26a to 26d. In Equation (1), Vw is the flow rate of the heat medium, pw is the density of the heat medium, Cpw is the specific heat at constant pressure of the heat medium, Tw is the temperature of the heat medium, a suffix "in" symbolizes a value for the heat medium at the inlet of each of the use side heat exchangers 26a to 26d, and a suffix "out" symbolizes a value for the heat medium at the outlet of each of the use side heat exchangers 26a to 26d.

[Math. 1]

$$Q = V_w \cdot (\rho_{win} \cdot Cp_{win} \cdot T_{win} - \rho_{wout} \cdot Cp_{wout} \cdot T_{wout}) \approx V_w \cdot \rho_w \cdot Cp_w (T_{win} - T_{wout})$$

When the flow rate of the heat medium flowing into the use side heat exchangers 26a to 26d remains constant, the differences between the temperatures of the heat medium at the inlets and outlets of the heat medium vary depending on a change in thermal load experienced by the use side heat exchangers 26a to 26d. Thus, the flow control valves 25a to 25d are controlled such that the differences between the temperatures of the heat medium at the inlets and outlets of the use side heat exchangers 26a to 26d approach a predetermined target value. With this operation, an excess heat medium can be supplied into the bypasses 27a to 27d to control the flow rate of the heat medium flowing into the use side heat exchangers 26a to 26d. The target value of the differences between the temperatures of the heat medium at the inlets and outlets of the use side heat exchangers 26a to 26d is set at, for example, 5 degrees C.

Figs. 3 to 7 assume that the flow control valves 25a to 25d are implemented using mixing valves located downstream of the use side heat exchangers 26a to 26d. Alternatively, the flow control valves 25a to 25d may be implemented using three-way valves located upstream of the use side heat exchangers 26a to 26d.

<Conventional Air-conditioning Apparatus>

In the air-conditioning apparatus of this embodiment, an air-conditioning operation instruction issued from a terminal such as a remote controller is transmitted to at least one of units constituting the system, and an operation corresponding to this instruction is performed. That is, when all instructions output from the terminal such as the remote controller are associated with a heating operation, the four-way valve 11, for example, is controlled such that the control devices 100 and 300 perform a heating only operation.

While a heating only operation, a cooling only operation, a heating main operation, or a cooling main operation is performed, a refrigerant and a heat medium on the refrigerant secondary side exchange heat through the intermediate heat exchangers 15a and 15b, and thus the temperature of the heat medium is kept constant.

However, when a suspension mode is set, the heat medium in the heat medium pipes 5 exchanges heat with, for example, air around the heat medium pipes 5. That is, the heat medium temperature is affected by an ambient air temperature (e.g., outdoor air or indoor temperature). In this situation, the temperature of the heat medium becomes unsuitable for a cooling or heating operation especially in summer and winter. The suspension mode refers to a mode in which the power supply of the air-conditioning apparatus is on, but an air-conditioning operation is temporarily stopped because, for example, an indoor space has reached a target temperature. In this suspension mode, the stop of the air-conditioning operation refers to a mode in which operation of the compressor 10, the pumps 21a and 21b, and fans (not shown) provided to the use side heat exchangers 26a to 26d are kept stopped. In the suspension mode, although the heat source device 1 is kept stopped, the indoor unit 2 performs an air supply operation in some cases.

In the case of transition from the suspension mode to a cooling or heating operation, (1) air providing a feeling of draft is supplied into the room; or (2) operation is performed with a reduced amount of air blowing from the indoor unit for a long period of time in order to reduce a feeling of draft.

More specifically, (1) in summer, the temperature of a heat medium increases in the suspension mode. Thus, when the suspension mode shifts to a cooling operation, the heat medium having an increased temperature is supplied to the use side heat exchangers 26a to 26d. Accordingly, the temperature of air supplied into the room through fans increases, providing a feeling of draft (a feeling of excessive heat) to the user.

In winter, the temperature of a heat medium decreases in a suspension mode. Thus, when the suspension mode shifts to a heating operation, a heat medium having a reduced temperature is supplied to the use side heat exchangers 26a to 26d. Accordingly, the temperature of air supplied into the room through fans decreases, providing a feeling of draft (a feeling of excessive cold) to the user.

In addition, the feeling of draft mentioned above is reduced by operation with a reduced volume of air from fans until the temperature of the heat medium decreases (in the case of summer) or the temperature of the heat medium increases (in the case of winter). In these cases, however, the time required by the room temperature to reach a target temperature increases.

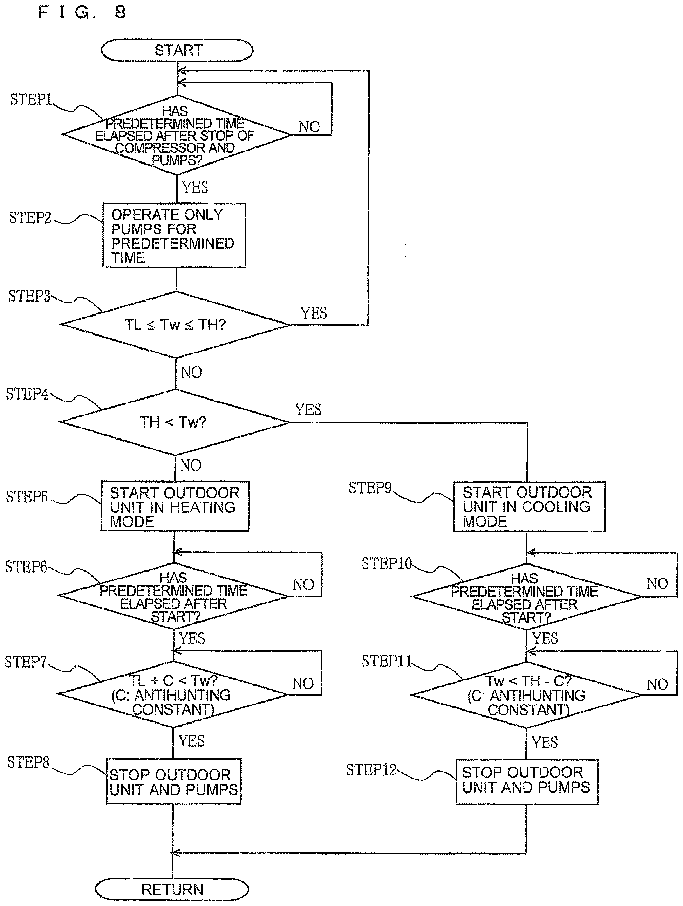

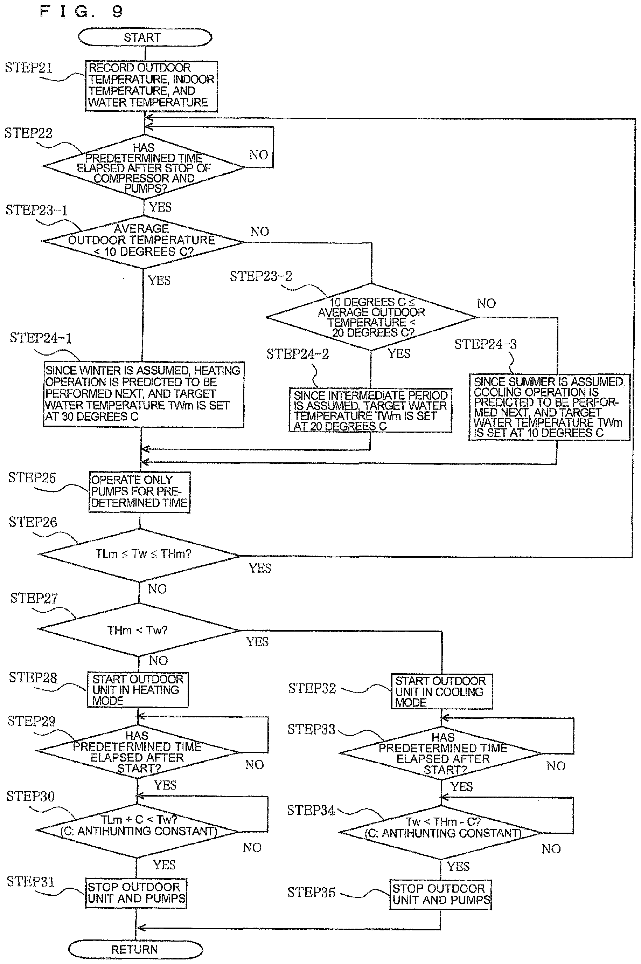

In view of this, in the air-conditioning apparatus of this embodiment, operation shown in the flowcharts of Figs. 8 and 9 are performed so that problems posed in (1) and (2) can be solved.

<Heat Medium Temperature Adjustment Operation Mode>

In the heat medium temperature adjustment operation mode, when the pumps 21a and 21b are stopped after an operation of preventing a heat medium from freezing, the temperature of the heat medium that varies upon heating or cooling the heat medium through, for example, outdoor air is set to fall within a predetermined temperature range. More specifically, the air-conditioning apparatus of this embodiment is configured to perform two heat medium temperature adjustment operation modes.

(A) One of the two modes is enabled when the outdoor-air temperature sensor 39 is not used. More specifically, in this mode, although the air-conditioning apparatus of this embodiment includes the outdoor-air temperature sensor 39, even if the air-conditioning apparatus of this embodiment does not include the outdoor-air temperature sensor 39, the heat medium temperature adjustment operation mode can be performed.

(B) The other mode is used to perform a control operation using the outdoor-air temperature sensor 39 in addition to the above-mentioned control operation (A). More specifically, in this mode the season is predicted based on a detection result obtained by the outdoor-air temperature sensor 39 and a predetermined temperature range, which is constant in control operation (A), is changed.

As shown in Figs. 6 and 7, the air-conditioning apparatus of this embodiment includes a system capable of simultaneous cooling and heating operations. Thus, the heat medium temperature adjustment operation mode of the air-conditioning apparatus of this embodiment can be used for either of cooling and heating modes.

Fig. 8 is a flowchart showing operation in the heat medium temperature adjustment operation mode. The heat medium temperature adjustment operation mode in the above-mentioned control operation (A) will be described first. The control devices 100 and 300 will be collectively referred to as a "control device" hereinafter.

(Step 1)

The control device determines whether the compressor 10 and the pumps 21a and 21b have been kept stopped for a predetermined time (e.g., one hour).
If the predetermined time has elapsed, the process proceeds to step 2.
If the predetermined time has not elapsed, step 1 is repeated.

(Step 2)

The control device drives the pumps 21a and 21b for a predetermined time.
After driving the pumps 21a and 21b for the predetermined time, the control device stops the pumps 21a and 21b again, and the process proceeds to step 3.
Step 2 is a step for preventing the temperature around a sensor from deviating from the average temperature of the heat medium, and in step 2, the pumps 21a and 21b are driven for a limited time.

(Step 3)

The control device determines whether the detection result of the heat medium temperature Tw is equal to or greater than a preset lower limit TL and equal to or less than a preset upper limit TH. For example, supposing that the temperature as a reference is 20 degrees C, it is determined whether the heat medium temperature Tw falls within the range of ±5 degrees C (TL = 15 degrees C, TH = 25 degrees C).
If the heat medium temperature Tw falls within the range, the process returns to step 1.
If the heat medium temperature Tw does not fall within the range, the process proceeds to step 4.

(Step 4)

The control device determines whether the detection result of the heat medium temperature Tw is higher than a preset upper limit TH (e.g., TH = 25 degrees C). More specifically, in step 4, it is determined whether the water temperature exceeds the upper limit of the temperature range serving as a reference.
If the heat medium temperature Tw is higher than TH, the process proceeds to step 9.
If the heat medium temperature Tw is not higher than TH, that is, lower than TL, the process proceeds to step 5.

(Step 5)

The control device controls various components so as to perform a heating operation.
In step 5, to return an excessively reduced heat medium temperature, which is lower than TL, to TL or more, operation is performed in a heating mode.
Thus, to obtain flow of a refrigerant and a heat medium in the heating only operation mode, the control device starts the compressor 10, switches the four-way valve 11 to a heating mode, starts the pump 21b, opens the expansion valves 16a, 16c, and 16e, and closes the expansion valves 16b and 16d. The heat medium may be heated by supplying the refrigerant and the heat medium similarly to those in the heating main operation mode.
When fans provided to the indoor units 2a to 2d are in operation, unnecessary wind is supplied into the room. Thus, the amount of air blown by the indoor units 2a to 2d is set to zero or to provide a breeze with no or little feeling of draft.

(Step 6)

The control device determines whether a predetermined time has elapsed after execution of the heating operation of step 5. The predetermined time is preferably determined in accordance with, for example, the length and size of refrigerant pipes and branch pipes.
If the predetermined time has elapsed, the process proceeds to step 7.
If the predetermined time has not elapsed, step 6 is repeated.

(Step 7)

The control device determines whether the detection result of the heat medium temperature Tw is higher than a preset lower limit TL+C (where C is an antihunting constant). That is, in step 7, it is determined whether the heat medium temperature Tw falls within a range higher than TL + C.
If the heat medium temperature Tw exceeds TL + C, the process proceeds to step 8.
If the heat medium temperature Tw does not exceed TL + C, step 7 is repeated. That is, since the heat medium temperature Tw does not exceed TL + C, the heating operation continues until the heat medium temperature Tw exceeds TL + C.

(Step 8)

The control device stops the heating operation. More specifically, the control device stops the compressor 10 and the pumps 21a and 21b. After step 8, the control device returns to step 1, that is, to a standby state.

(Step 9)

The control device controls various components so as to perform a cooling operation.
In step 9, the heat medium temperature Tw is higher than TH, and in order to return this excessively high heat medium temperature to TH or less, operation is performed in a cooling mode.
Thus, to obtain flow of a refrigerant and a heat medium in the cooling only operation mode, the control device starts the compressor 10, switches the four-way valve 11 to a cooling mode, starts the pump 21a, opens the expansion valves 16b and 16d, and closes the expansion valves 16a, 16c, and 16e. The heat medium may be cooled by supplying the refrigerant and the heat medium similarly to those in the cooling main operation mode.
When fans provided to the indoor units 2a to 2d are in operation, unnecessary wind is supplied into the room. Thus, the amount of air blown by the indoor units 2a to 2d is set to zero or to provide a breeze with no or little feeling of draft.

(Step 10)

The control device determines whether a predetermined time has elapsed after execution of the cooling operation of step 5. The predetermined time is preferably determined in accordance with, for example, the length and size of refrigerant pipes and branch pipes.
If the predetermined time has elapsed, the process proceeds to step 11.
If the predetermined time has not elapsed, step 10 is repeated.

(Step 11)

The control device determines whether the detection result of the heat medium temperature Tw is lower than a preset upper limit TH - C (where C is an antihunting constant). That is, in step 11, it is determined whether the heat medium temperature falls within a range lower than TH - C.
If the heat medium temperature Tw is lower than TH - C, the process proceeds to step 12.
If the heat medium temperature Tw is not lower than TH - C, step 11 is repeated. That is, since the heat medium temperature Tw is not lower than TH - C, the cooling operation continues until the heat medium temperature Tw falls below TH - C.

(Step 12)

The control device stops the cooling operation. More specifically, the control device stops the compressor 10 and the pumps 21a and 21b. After step 12, the control device returns to step 1, that is, to a standby state.
Frequent start of the outdoor unit 1 (the compressor 10 and the four-way valve 11) impairs energy saving performance, although this is done for prevention of a feeling of draft. Thus, in steps 7 and 11, it is determined whether the heat medium temperature falls within the range of TL to TH including the antihunting constant C in order to prevent the outdoor unit 1 (the compressor 10 and the four-way valve 11) from repeating on-off more frequently than needed because of hunting of the heat medium temperature Tw.
Fig. 8 shows an example of determination as to whether the heat medium temperature Tw falls within the range of ±5 degrees C (TL = 15 degrees C, TH = 25 degrees C) when the reference temperature is 20 degrees C. However, the present invention is not limited to this example, and the reference temperature may be arbitrarily selected.
It should be noted that when the reference temperature is set to be close to an outdoor-air temperature of the intermediate periods, the number of start operations of the outdoor unit 1 (the compressor 10 and the four-way valve 11) decreases, and thereby, a higher energy saving performance can be obtained.

That is, in the suspension mode of the air-conditioning apparatus of this embodiment, the compressor 10 and the pumps 21a and 21b are also driven such that the heat medium temperature is kept within the predetermined range so as not to provide a feeling of draft. Consequently, energy is consumed accordingly. However, in this embodiment, the reference temperature is set at, for example, a temperature close to an outdoor-air temperature of an intermediate period, and thus energy consumption is reduced so that the energy saving performance of the air-conditioning apparatus can be enhanced.

In the air-conditioning apparatus of this embodiment, before the control device drives the pumps 21a and 21b or at the same time (including almost the same time) when the control device drives the pumps 21a and 21b, the channel switching valves 22a to 22d and 23a to 23d are switched so as to ensure the circulation channels of the heat medium. With this operation, the heat medium in the heat medium circulation circuit that has been heated or cooled in the intermediate heat exchangers 15a and 15b is conveyed from the intermediate heat exchangers 15a and 15b to the use side heat exchangers 26a to 26d. Accordingly, temperature variations of the heat medium can be reduced.

Fig. 9 is a flowchart showing the operation of the heat medium temperature adjustment operation mode different from that shown in Fig. 8.

In the operation shown in Fig. 8 above, the heat medium temperature in the cooling operation or the heating operation is kept within the predetermined temperature range, and even when the cooling operation or the heating operation starts again, the heat medium temperature can be rapidly cooled or heated to the target temperature. That is, in the operation of Fig. 8, even while any one of the cooling operation or the heating operation is performed, the heat medium temperature can rapidly reach the target temperature.

A heat medium temperature adjustment operation mode shown in Fig. 9 is different from that of Fig. 8 in that the predetermined temperature range is changed in accordance with the outdoor-air temperature. More specifically, in the heat medium temperature adjustment operation mode of Fig. 9, the upper and lower limits of the predetermined temperature range shown in Fig. 8 is changed in three patterns of summer, intermediate periods (spring and autumn), and winter, in accordance with the average of the outdoor-air temperature sampled in advance.

(Step 21)

The control device continuously samples the average outdoor-air temperature and the heat medium temperature.

In this embodiment, the control device continuously samples average outdoor-air temperatures and heat medium temperatures for about one day or several days. Data sampled in step 21 is used to determine a heat medium temperature serving as a reference in steps 24-1 to 24-3, which will be described later.

(Step 22)

The control device determines whether a predetermined time (e.g., one hour) has elapsed after the stop of the compressor 10 and the pumps 21a and 21b.

If the predetermined time has elapsed, the process proceeds to step 23.

If the predetermined time has not elapsed, step 22 is repeated.

(Step 23-1)

The control device determines whether the average outdoor-air temperature is lower than 10 degrees C.

If the average outdoor-air temperature is lower than 10 degrees C, the process proceeds to step 24-1.

The average outdoor-air temperature is not lower than 10 degrees C, the process proceeds to step 23-2.

(Step 23-2)

The control device determines whether the average outdoor-air temperature is equal to or greater than 10 degrees C and falls within a range lower than 20 degrees C.

If the average outdoor-air temperature falls within the range, the process proceeds to step 24-2.

If the average outdoor-air temperature does not fall within the range, the process proceeds to step 24-3.

Although thresholds of 10 degrees C and 20 degrees C are set in steps 3-1 and 3-2, they may be changed for, for example, each region where the air-conditioning apparatus of this embodiment is located, or each user demand.

(Step 24-1)

The control device sets the heat medium temperature as a reference at 30 degrees C. Since the reference heat medium temperature Twm is set at 30 degrees C, if the temperature width of the heat medium is set at, for example, ±5 degrees C, then the preset lower limit TLm is 25 degrees C, and the preset upper limit THm is 35 degrees C.
Since the outdoor-air temperature is low in step 23-1, the temperature is set assuming winter in step 24-1. That is, the next operation mode is expected to be a heating mode, and the medium temperature is set to be as relatively high as 30 degrees C.

(Step 24-2)

The control device sets the heat medium temperature Twm as a reference at 20 degrees C. Since the reference heat medium temperature Twm is set at 20 degrees C, if the temperature width of the heat medium is set at, for example, ±5 degrees C, then the preset lower limit TLm is 15 degrees C and the preset upper limit THm is 25 degrees C.
Since the outdoor-air temperature is equal to or higher than 10 degrees C and lower than 20 degrees C in step 23-2, the temperature is set assuming an intermediate season (spring or autumn) in the step 24-2. That is, since the next operation mode is assumed to be both a heating mode and a cooling mode, the reference temperature is set at 20 degrees C so that the apparatus can cope with both cooling and heating operations.

(Step 24-3)

The control device sets the heat medium temperature Twm as a reference at 10 degrees C. Since the reference heat medium temperature Twm is set at 10 degrees C, if the temperature width of the heat medium is set at, for example, ±5 degrees C, then the preset lower limit TLm is 5 degrees C and the preset upper limit THm is 15 degrees C.
Since the outdoor-air temperature is as high as 20 degrees C or more in step 23-2, the temperature is set assuming summer in step 24-3. That is, since the next operation mode is expected to be a cooling mode, the reference temperature is set to be as relatively low as 10 degrees C.
In steps 24-1 to 24-3, the reference heat medium temperatures Twm are set to 30 degrees C, 20 degrees C, and 10 degrees C. These temperatures Twm may be changed for, for example, each region where the air-conditioning apparatus is located, or each user demand. For example, by setting the reference heat medium temperature Twm to be close to an average outdoor-air temperature in each season, energy saving performance can further be enhanced.
In steps 25 to 35 below, control operations corresponding to steps 2 to 12 in Fig. 8 are performed.

(Step 25)

The control device drives the pumps 21a and 21b only for a predetermined time.
After driving the pumps 21a and 21b for the predetermined time, the control device stops the pumps 21a and 21b again, and the process proceeds to step 26.
Similarly to step 2 in Fig. 8, step 25 is a step of preventing an ambient temperature of sensors from deviating from the average temperature of the heat medium due to a temperature variation of the heat medium. In step 25, the pumps 21a and 21b are driven for a limited time.

(Step 26)

The control device determines whether the detection result of the heat medium temperature Tw is equal to or greater than the preset lower limit TLm and equal to or less than the preset upper limit THm. For example, when the process has reached step 26 by way of step 24-2, the reference temperature is 20 degrees C, and it is determined whether the heat medium temperature Tw falls within the range of ±5 degrees C (TLm = 15 degrees C and THm = 25 degrees C).
If the heat medium temperature Tw falls within the range, the process returns to step 21.
If the heat medium temperature Tw does not fall within the range, the process proceeds to step 27.

(Step 27)

The control device determines whether the detection result of the heat medium temperature Tw is higher than the preset upper limit THm (e.g., THm = 25 degrees C). That is, in step 27, it is determined whether the heat medium temperature Tw exceeds the upper limit of the reference temperature range.
If the heat medium temperature Tw is higher than THm, the process proceeds to step 32.

If the heat medium temperature Tw is higher than THm, that is, lower than TLm, the process proceeds to step 28.

(Step 28)

The control device controls various components so as to perform a heating operation.

In step 28, to return an excessively reduced heat medium temperature, which is lower than TLm, to TLm or more, operation is performed in a heating mode.

Thus, to obtain flow of a refrigerant and a heat medium in the heating only operation mode, the control device starts the compressor 10, switches the four-way valve 11 to a heating mode, starts the pump 21b, opens the expansion valves 16a, 16c, and 16e, and closes the expansion valves 16b and 16d. The heat medium may be heated by supplying the refrigerant and the heat medium similarly to those in the heating main operation mode.

When fans provided to the indoor units 2a to 2d are in operation, unnecessary wind is supplied into the room. Thus, the amount of air blown by the indoor units 2a to 2d is set to zero or to provide a breeze with no or little feeling of draft.

(Step 29)

The control device determines whether a predetermined time has elapsed after execution of the heating operation of step 29. The predetermined time is preferably determined in accordance with, for example, the length and size of refrigerant pipes and branch pipes.

If the predetermined time has elapsed, the process proceeds to step 30.

If the predetermined time has not elapsed, step 29 is repeated.

(Step 30)

The control device determines whether the detection result of the heat medium temperature Tw is higher than a preset lower limit TLm + C (where C is an antihunting constant). That is, in step 30, it is determined whether the heat medium temperature falls within a range higher than TLm + C.

If the heat medium temperature Tw exceeds TLm + C, the process exceeds to step 31.

If the heat medium temperature Tw does not exceed TLm + C, step 30 is repeated. That is, since the heat medium temperature Tw does not exceed TLm + C, the heating operation continues until the heat medium temperature Tw exceeds TLm + C.

(Step 31)

The control device stops the heating operation. More specifically, the control device stops the compressor 10 and the pumps 21a and 21b. After step 31, the control device returns to step 21, that is, to a standby state.

(Step 32)

The control device controls various components so as to perform a cooling operation.

In step 32, to return an excessively high heat medium temperature, which is higher than THm, to THm or less, operation is performed in a cooling mode.

Thus, to obtain flow of a refrigerant and a heat medium in the cooling only operation mode, the control device starts the compressor 10, switches the four-way valve 11 to a cooling mode, starts the pump 21a, opens the expansion valves 16b and 16d, and closes the expansion valves 16a, 16c, and 16e. The heat medium may be cooled by supplying the refrigerant and the heat medium similarly to those in the cooling main operation mode.

When fans provided to the indoor units 2a to 2d are in operation, unnecessary wind is supplied into the room. Thus, the amount of air blown by the indoor units 2a to 2d is set to zero or to provide a breeze with no or little feeling of draft.

(Step 33)

The control device determines whether a predetermined time has elapsed after execution of cooling operation of step 33. The predetermined time is preferably determined in accordance with, for example, the length and size of refrigerant pipes and branch pipes.

If the predetermined time has elapsed, the process proceeds to step 34.

If the predetermined time has not elapsed, step 33 is repeated.

(Step 34)

The control device determines whether the detection result of the heat medium temperature Tw is lower than a preset upper limit THm - C (where C is an antihunting constant). That is, in step 34, it is determined whether the heat medium temperature falls within a range lower than THm - C.

If the heat medium temperature Tw is lower than THm - C, the process proceeds to step 35.

If the heat medium temperature Tw is not lower than THm - C, step 34 is repeated. That is, since the heat medium temperature Tw is not lower than THm - C, the cooling operation continues until the heat medium temperature Tw falls below THm - C.

(Step 35)

The control device stops the cooling operation. More specifically, the control device stops the compressor 10 and the pumps 21a and 21b. After step 35, the control device returns to step 21, that is, to a standby state.

As described earlier with reference to Fig. 9, the air-conditioning apparatus of this embodiment expects the season on the basis of the average outdoor-air temperature and determines a target heat medium temperature. However, the present invention is not limited to this example. Since the last operation mode is expected to be performed again next, the control device may have the function of recording the last operation mode. That is, when the suspension mode is performed, the control device refers to the record of the operation modes performed so far, and the next operation is performed in the last operation mode performed by the control device among the recorded operation modes.

Examples of the refrigerant include single-substance refrigerants such as R-22 and R-134a, near-azeotropic refrigerant mixtures such as R-410A and R-404A, zeotropic refrigerant mixtures such as R-407C, refrigerants each including a double bond and having a relatively low global warming potential such as $CF_3CF=CH_2$, and mixtures of these refrigerants, and natural refrigerants such as $CO_2$ and propane.

In this embodiment, the refrigerant circuit includes the accumulator, but may include no accumulator. The check valves 13a to 13d are not necessary components, and similar operations and advantages can be achieved with a circuit including no check valves 13a to 13d.

The heat source side heat exchanger 12 and the use side heat exchangers 26a to 26d are preferably provided with air-sending devices so that condensation or evaporation can be promoted by air supply. However, the present invention is not limited to this structure, and the use side heat exchangers 26a to 26d can be implemented using, for example, a radiation panel heater. The heat source side heat exchanger 12 can be implemented using a water-cooled heat exchanger that transfers heat by means of water or antifreeze, and can adopt any type as long as it can radiate or absorb heat.

In the above-described example, the four use side heat exchangers 26a to 26d are employed. However, the number of use side heat exchangers is not limited.

The channel switching valves 22a to 22d and 23a to 23d, the stop valves 24a to 24d, and the flow control valves 25a to 25d are connected to the use side heat exchangers 26a to 26d in a one-to-one correspondence. However, the present invention is not limited to this example, and pluralities of channel switching valves, stop valves, and flow control valves may be connected to each use side heat exchanger. In this case, the channel switching valves, the stop valves, and the flow control valves connected to the same use side heat exchanger need only be operated in the same manner.

In the above Embodiment, the intermediate heat exchanger 15a for heating and the intermediate heat exchanger 15b for cooling are provided. However, the present invention is not limited to this structure. Simply performing either heating or cooling requires only one intermediate heat exchanger. In this case, the heat medium need not flow through another intermediate heat exchanger in the heat medium temperature adjustment operation, and thus channels for this flow are simplified. One or more sets of the heating intermediate heat exchanger 15a and the cooling intermediate heat exchanger 15b may be provided.

Instead of the flow control valves 25a to 25d of the three-way channel type illustrated in, for example, Fig. 3, flow control valves of the two-way channel type that can continuously change the opening area using, for example, a stepping motor can be used. Control in this case is similar to that when three-way channel regulating valves are used, and the opening degrees of the two-way channel regulating valves are adjusted to control the flow rates of the heat medium into the use side heat exchangers 26a to 26d so that the differences between the temperatures of the heat medium at the inlets an outlets of the use side heat exchangers 26a to 26d reach a target value of, for example, 5 degrees C. Upon this operation, the rotation speeds of the pumps 21a and 21b need only be controlled such that the temperatures at the inlets or outlets of the intermediate heat exchangers 15a and 15b take a predetermined target value. The use of two-way channel regulating valves as the flow control valves 25a to 25d advantageously eliminates the necessity of the stop valves 24a to 24d and reduces cost for constructing the system.

In the foregoing description, the flow control valves 25a to 25d, the third temperature sensors 33a to 33d, and the fourth temperature sensors 34a to 34d are placed inside the relay unit 3. However, the present invention is not limited to this example, and the flow control valves 25a to 25d, the third temperature sensors 33a to 33d, and the fourth temperature sensors 34a to 34d can also be placed near the use side heat exchangers 26a to 26d, that is, inside or near the indoor unit 2. In this case, no substantial problems occur in function, and similar operations and advantages can be obtained. In the case of using two-way channel regulating valves as the flow control valves 25a to 25d, the third temperature sensors 33a to 33d and the fourth temperature sensors 34a to 34d are placed inside or near the relay unit 3 and the flow control valves 25a to 25d are placed inside or near the indoor unit 2.

In the air-conditioning apparatus of this embodiment having the foregoing structure, when the temperature of the heat medium falls outside a set temperature range, operations for adjusting the heat medium temperature, such as operating the pumps, circulating the heat medium, and intermittently starting the outdoor unit. Then, wind providing little feeling of draft can be supplied into the room, and the indoor temperature can reach a desired indoor temperature in a relatively short time.

[Advantages of Air-conditioning Apparatus of Embodiment]

When the mode shifts to a suspension mode (the air-conditioning operation temporarily stops) so that operations of the compressor and the pumps temporarily stop, the temperature of the heat medium varies due to factors associated with, for example, outdoor air, and falls outside a predetermined temperature range in some cases. In the air-conditioning apparatus of this embodiment, however, when the temperature of the heat medium falls outside the predetermined temperature range, the compressor 10 and the pumps 21a and 21b are driven so that the intermediate heat exchangers 15a and 15b exchange heat between the refrigerant and the heat medium and, thereby the temperature of the heat medium falls within the predetermined temperature range. With this operation, wind providing little feeling of draft can be supplied into the room immediately after the start of operation, and an increase in time taken for the temperature of the heat medium to reach the target indoor temperature can be reduced.

Reference Signs List

1 heat source device (outdoor unit), 2 indoor unit, 3 relay unit, 3a main-relay unit, 3b, 3b(1), 3b(2) sub-relay unit, 4 refrigerant pipe, 5 heat medium pipe, 6 outdoor space, 7 indoor space, 8 non-air-conditioned space, 9 construction such as building, 10 compressor, 11 four-way valve, 12 heat source side heat exchanger, 13a-13d check valve, 14 gas-liquid separator, 15a, 15b intermediate heat exchanger, 16a-16e, expansion valve, 17 accumulator, 21a, 21b pump, 22a-22d channel switching valve, 23a-23d channel switching valve, 24a-24d stop valve, 25a-25d flow control valve, 26a-26d use side heat exchanger, 27a-27d bypass, 28a, 28b bypass stop valve, 31a, 31b first temperature sensor, 32a, 32b second temperature sensor, 33a-33d third temperature sensor, 34a-34d fourth temperature sensor, 35 fifth temperature sensor, 36 pressure sensor, 37 sixth temperature sensor, 38 seventh temperature sensor, 39 eighth temperature sensor

**Claims**

1.  An air-conditioning apparatus including
    a refrigeration cycle circuit including a compressor (10), a heat source side heat exchanger (12), at least one expansion valve (16a - 16e), and an intermediate heat exchanger (15a, 15b) connected to one another via refrigerant pipes, the intermediate heat exchanger (15a, 15b) being configured to exchange heat between a refrigerant and a heat medium,
    a heat medium circulation circuit including the intermediate heat exchanger (15a, 15b), a pump (21a, 21b) configured to convey the heat medium, and a use side heat exchanger connected to one another via heat medium pipes, a fan provided to the use side heat exchanger,
    a temperature sensor (31a, 31b, 32a, 32b) configured to detect the temperature of the heat medium,
    a control device (100, 300) configured to control the compressor (10) and the pump (21a, 21b);
    wherein the control device (100, 300) is configured to perform an air conditioning operation mode including a cooling operation mode and heating operation mode, and
    a heat medium temperature adjustment operation mode in which when the detection result of the heat medium temperature falls outside a predetermined temperature range while the compressor (10) and the pump (21a, 21b) are temporarily kept stopped,
    the compressor (10) and the pump (21a, 21b) are driven to cause the intermediate heat exchanger (15a, 15b) to exchange heat between the refrigerant and the heat medium so that the heat medium is heated or cooled to have a temperature that falls within the predetermined temperature range,
    **characterized in that** the control device (100, 300) is further configured to control the fan, and

in the heat medium temperature adjustment operation mode, keep the fan stopped or operate the fan with a reduced amount of air.

2. The air-conditioning apparatus of claim 1, wherein
the intermediate heat exchanger comprises a plurality of intermediate heat exchangers,
the use side heat exchanger comprises a plurality of use side heat exchangers,
the apparatus further comprises:

a plurality of channel switching valves (22a - 22d, 23a - 23d) located in portions of the heat medium circulation circuit corresponding to an inlet and an outlet of the heat medium in each of the plurality of the use side heat exchangers (26a - 26d), and configured to switch a passage of the heat medium having passed through the plurality of intermediate heat exchangers (15a, 15b) to one of the plurality of use side heat exchangers (26a - 26d), and
wherein the control device (100, 300) is configured to control the compressor (10) and the pump (21a, 21b) based on a detection result obtained by at least the temperature sensor (31a, 31b, 32a, 32b) to perform the heat medium temperature adjustment operation mode,
control the channel switching valve (22a - 22d, 23a - 23d) such that the heat medium is supplied from at least two of the plurality of intermediate heat exchangers (15a, 15b) to the corresponding ones of the plurality of use side heat exchangers (26a - 26d), and
mix, through the channel switching valve (22a - 22d, 23a - 23d), a stream of the heat medium supplied from one of the plurality of intermediate heat exchangers (15a, 15b) to the corresponding one of the plurality of use side heat exchangers (26a - 26d) with a stream of the heat medium supplied from another one of the plurality of intermediate heat exchangers (15a, 15b) to the corresponding one of the plurality of use side heat exchangers (26a - 26d).

3. The air-conditioning apparatus of claim 2, wherein
when the detection result obtained by the temperature sensor (31a, 31b, 32a, 32b) is higher than the temperature range, the control device (100, 300) causes a corresponding one of the plurality of intermediate heat exchangers (15a, 15b) to function as an evaporator and cools the heat medium passing through the corresponding one of the plurality of intermediate heat exchangers (15a, 15b).

4. The air-conditioning apparatus of claim 3, wherein
when the detection result obtained by the temperature sensor (31a, 31b, 32a, 32b) a predetermined time after driving of the compressor (10) and the pump (21a, 21b) is higher than a temperature obtained by adding an antihunting constant to a lower limit of the temperature range and is not higher than an upper limit of the temperature range, the control device (100, 300) stops the compressor (10) and the pump (21a, 21b).

5. The air-conditioning apparatus of claim 2, wherein
when the detection result obtained by the temperature sensor (31a, 31b, 32a, 32b) is lower than the temperature range, the control device causes a corresponding one of the plurality of intermediate heat exchangers (15a, 15b) to function as a radiator and heats the heat medium passing through the corresponding one of the plurality of intermediate heat exchangers (15a, 15b).

6. The air-conditioning apparatus of claim 5, wherein
when the detection result obtained by the temperature sensor (31a, 31b, 32a, 32b) a predetermined time after driving of the compressor (10) and the pump (21a, 21b) is lower than a temperature obtained by subtracting an antihunting constant from an upper limit of the temperature range and is not lower than a lower limit of the temperature range, the control device (100, 300) stops the compressor (10) and the pump (21a, 21b).

7. The air-conditioning apparatus of any one of claims 2 to 6, wherein the control device (100, 300)
opens the channel switching valve (22a - 22d, 23a - 23d) to ensure a circulation channel of the heat medium before or concurrently with driving of the pump (21a, 21b), and
causes the heat medium to circulate between at least one of the plurality of intermediate heat exchangers (15a, 15b) and a corresponding one of the plurality of use side heat exchangers (26a - 26d).

8. The air-conditioning apparatus of any one of claims 2 to 7, further comprising:

an outdoor-air temperature sensor configured to detect an outdoor-air temperature, wherein

the control device (100, 300)
calculates an average temperature of outdoor air in a predetermined period of time based on a detection result obtained by the outdoor-air temperature sensor, and
determines an upper limit and a lower limit of the temperature range based on the calculated average temperature.

**Patentansprüche**

1. Klimaanlage, umfassend

einen Kältekreis-Kreislauf, der einen Verdichter (10), einen wärmequellenseitigen Wärmetauscher (12), zumindest ein Expansionsventil (16a - 16e) und einen Zwischenwärmetauscher (15a, 15b) umfasst, die miteinander über Kältemittelleitungen verbunden sind, wobei der Zwischenwärmetauscher (15a, 15b) eingerichtet ist, Wärme zwischen einem Kältemittel und einem Wärmemedium auszutauschen,
einen Wärmemediumzirkulationskreislauf, der den Zwischenwärmetauscher (15a, 15b), eine Pumpe (21a, 21b), die eingerichtet ist, das Wärmemedium zu transportieren, und einen nutzungsseitigen Wärmetauscher umfasst, die miteinander über Wärmemediumleitungen verbunden sind, wobei der nutzungsseitige Wärmetauscher mit einem Lüfter versehen ist,
einen Temperatursensor (31a, 31b, 32a, 32b), der eingerichtet ist, die Temperatur des Wärmemediums zu erfassen,
eine Steuerungseinrichtung (100, 300), die eingerichtet ist, den Verdichter (10) und die Pumpe (21a, 21b) zu steuern;
wobei die Steuerungseinrichtung (100, 300) eingerichtet ist, einen Klimaanlagenbetriebsmodus durchzuführen, der einen Kühlbetriebsmodus und einen Erwärmungsbetriebsmodus umfasst, und
einen Wärmemediumtemperaturanpassungs-Betriebsmodus, in dem, wenn das Erfassungsergebnis der Wärmemediumtemperatur außerhalb eines vorbestimmten Temperaturbereichs liegt während der Verdichter (10) und die Pumpe (21a, 21b) vorübergehend angehalten sind,
der Verdichter (10) und die Pumpe (21a, 21b) angetrieben werden, um den Zwischenwärmetauscher (15a, 15b) zu veranlassen, Wärme zwischen dem Kältemittel und dem Wärmemedium auszutauschen, so dass das Wärmemedium erwärmt oder gekühlt wird, um eine Temperatur aufzuweisen, die in dem vorbestimmten Temperaturbereich liegt,
**dadurch gekennzeichnet, dass** die Steuerungseinrichtung (100, 300) ferner eingerichtet ist, den Lüfter zu steuern, und
im Wärmemediumtemperaturanpassungs-Betriebsmodus den Lüfter anzuhalten oder den Lüfter mit einer reduzierten Menge an Luft zu betreiben.

2. Klimaanlage nach Anspruch 1, wobei

der Zwischenwärmetauscher eine Vielzahl von Zwischenwärmetauschern umfasst,
der nutzungsseitige Wärmetauscher eine Vielzahl von nutzungsseitigen Wärmetauschern umfasst,
wobei die Vorrichtung ferner umfasst:

eine Vielzahl von Kanalschaltventilen (22a-22d, 23a-23d), die in Abschnitten des Wärmemediumzirkulationskreislaufs angeordnet sind, die einem Einlass und einem Auslass des Wärmemediums in jedem der Vielzahl von nutzungsseitigen Wärmetauschern (26a-26d) entsprechen, und eingerichtet sind, einen Durchgang des Wärmemediums, das durch die Vielzahl von Zwischenwärmetauschern (15a, 15b) hindurchgegangen ist, auf einen der Vielzahl von nutzungsseitigen Wärmetauschern (26a-26d) zu schalten, und wobei die Steuerungseinrichtung (100, 300) eingerichtet ist zum
Steuern des Verdichters (10) und der Pumpe (21a, 21b) auf Grundlage eines Erfassungsergebnisses, das mindestens durch den Temperatursensor (31a, 31b, 32a, 32b) erhalten wurde, um den Wärmemediumtemperaturanpassungs-Betriebsmodus durchzuführen,
Steuern des Kanalschaltventils (22a-22d, 23a-23d), so dass das Wärmemedium von mindestens zwei der Vielzahl von Zwischenwärmetauschern (15a, 15b) den den entsprechenden der Vielzahl von nutzungsseitigen Wärmetauschern (26a-26d) zugeführt wird, und
Mischen, durch das Kanalschaltventil (22a-22d, 23a-23d), eines Stroms des Wärmemediums, der von einem der Vielzahl von Zwischenwärmetauschern (15a, 15b) dem entsprechenden der Vielzahl von nutzungsseitigen Wärmetauschern (26a-26d) zugeführt wird, mit einem Strom des Wärmemediums, der von einem anderen der Vielzahl von Zwischenwärmetauschern (15a, 15b) dem entsprechenden der Vielzahl von nutzungsseitigen Wärmetauschern (26a-26d) zugeführt wird.

3. Klimaanlage nach Anspruch 2, wobei
wenn das durch den Temperatursensor (31a, 31b, 32a, 32b) erhaltene Erfassungsergebnis höher als der Temperaturbereich ist, die Steuerungseinrichtung (100, 300) einen entsprechenden der Vielzahl von Zwischenwärmetauschern (15a, 15b) veranlasst, als Verdampfer zu arbeiten und das durch den entsprechenden der Vielzahl von Zwischenwärmetauschern (15a, 15b) hindurchgehende Wärmemedium kühlt.

4. Klimaanlage nach Anspruch 3, wobei
wenn das durch den Temperatursensor (31a, 31b, 32a, 32b) erhaltene Erfassungsergebnis eine vorbestimmte Zeit nach dem Antreiben des Verdichters (10) und der Pumpe (21a, 21b) höher ist als eine Temperatur, die durch Addieren einer Antihunting-Konstanten zu einer unteren Grenze des Temperaturbereichs erhalten wird, und nicht höher als eine obere Grenze des Temperaturbereichs ist, die Steuerungseinrichtung (100, 300) den Verdichter (10) und die Pumpe (21a, 21b) anhält.

5. Klimaanlage nach Anspruch 2, wobei
wenn das durch den Temperatursensor (31a, 31b, 32a, 32b) erhaltene Erfassungsergebnis niedriger als der Temperaturbereich ist, die Steuerungseinrichtung einen entsprechenden der Vielzahl von Zwischenwärmetauschern (15a, 15b) veranlasst, als Radiator zu arbeiten und das durch den entsprechenden der Vielzahl von Zwischenwärmetauschern (15a, 15b) hindurchgehende Wärmemedium erwärmt.

6. Klimaanlage nach Anspruch 5, wobei
wenn das durch den Temperatursensor (31a, 31b, 32a, 32b) erhaltene Erfassungsergebnis eine vorbestimmte Zeit nach dem Antreiben des Verdichters (10) und der Pumpe (21a, 21b) niedriger ist als eine Temperatur, die durch Subtrahieren einer Antihunting-Konstanten von einer oberen Grenze des Temperaturbereichs erhalten wird, und nicht niedriger als eine untere Grenze des Temperaturbereichs ist, die Steuerungseinrichtung (100, 300) den Verdichter (10) und die Pumpe (21a, 21b) anhält.

7. Klimaanlage nach einem der Ansprüche 2 bis 6, wobei

die Steuerungseinrichtung (100, 300)
das Kanalschaltventil (22a-22d, 23a-23d) öffnet, um einen Zirkulationskanal des Wärmemediums vor oder gleichzeitig mit dem Antreiben der Pumpe (21a, 21b) zu gewährleisten, und
das Wärmemedium veranlasst, zwischen mindestens einer der Vielzahl von Zwischenwärmetauschern (15a, 15b) und einem entsprechenden der Vielzahl von nutzungsseitigen Wärmetauschern (26a-26d) zu zirkulieren.

8. Klimaanlage nach einem der Ansprüche 2 bis 7, ferner umfassend:

einen Außentemperatursensor, der eingerichtet ist, eine Außentemperatur zu erfassen, wobei
die Steuerungseinrichtung (100, 300)
eine Durchschnittstemperatur der Außenluft in einer vorbestimmten Zeitspanne auf Grundlage eines Erfassungsergebnisses, das durch den Außentemperatursensor erhalten wird, berechnet, und
eine obere Grenze und eine untere Grenze des Temperaturbereichs auf Grundlage der berechneten Durchschnittstemperatur bestimmt.

**Revendications**

1. Appareil de climatisation comprenant
un circuit de cycle de réfrigération comprenant un compresseur (10), un échangeur de chaleur du côté source de chaleur (12), au moins une soupape d'expansion (16a - 16e), et un échangeur de chaleur intermédiaire (15a, 15b), connectés les uns aux autres par l'intermédiaire de canalisations de fluide frigorigène, l'échangeur de chaleur intermédiaire (15a, 15b) étant configuré pour échanger la chaleur entre un fluide frigorigène et un milieu thermique, un circuit de circulation de milieu thermique comprenant l'échangeur de chaleur intermédiaire (15a, 15b), une pompe (21a, 21b) configurée pour acheminer le milieu thermique, et un échangeur de chaleur du côté utilisation connectés les uns aux autres par l'intermédiaire de canalisations de milieu thermique, une soufflante prévue dans l'échangeur de chaleur du côté utilisation, un capteur de température (31a, 31b, 32a, 32b) configuré pour détecter la température du milieu thermique, un dispositif de commande (100, 300) configuré pour commander le compresseur (10) et la pompe (21a, 21b) ;

où le dispositif de commande (100, 300) est configuré pour exécuter

un mode de fonctionnement de climatisation comprenant un mode de fonctionnement en refroidissement et un mode de fonctionnement en chauffage, et

un mode de fonctionnement de réglage de la température du milieu thermique dans lequel, lorsque le résultat de la détection de la température du milieu thermique se situe en dehors d'une plage de températures prédéterminée tandis que le compresseur (10) et la pompe (21a, 21b) sont temporairement maintenus arrêtés, le compresseur (10) et la pompe (21a, 21b) sont commandés de façon à ce que l'échangeur de chaleur intermédiaire (15a, 15b) échange la chaleur entre le fluide frigorigène et le milieu thermique, de telle sorte que le milieu thermique soit chauffé ou refroidi afin que la température se situe à l'intérieur de la plage de températures prédéterminée, **caractérisé en ce que** le dispositif de commande (100, 300) est configuré en outre pour commander la soufflante, et dans le mode de fonctionnement de réglage de la température du milieu thermique, maintenir la soufflante arrêtée ou actionner la soufflante avec une quantité d'air réduite.

2. Appareil de climatisation selon la revendication 1, où

l'échangeur de chaleur intermédiaire comprend une pluralité d'échangeurs de chaleur intermédiaires,

l'échangeur de chaleur du côté utilisation comprend une pluralité d'échangeurs de chaleur du côté utilisation,

l'appareil comprend en outre :

une pluralité de soupapes de commutation de canal (22a - 22d, 23a - 23d) situées dans les parties du circuit de circulation de milieu thermique qui correspondent à une entrée et à une sortie du milieu thermique dans chacun de la pluralité d'échangeurs de chaleur du côté utilisation (26a - 26d), et configurées pour commuter un passage du milieu thermique qui est passé à travers la pluralité d'échangeurs de chaleur intermédiaires (15a, 15b) vers l'un de la pluralité d'échangeurs de chaleur du côté utilisation (26a - 26d), et

où le dispositif de commande (100, 300) est configuré pour

commander le compresseur (10) et la pompe (21a, 21b) sur la base du résultat d'une détection obtenu par l'un des capteurs de température (31a, 31b, 32a, 32b) afin d'exécuter le mode de fonctionnement de réglage de la température du milieu thermique,

commander la soupape de commutation de canal (22a - 22d, 23a - 23d) de telle sorte que le milieu thermique soit fourni à partir de deux au moins de la pluralité d'échangeurs de chaleur intermédiaires (15a, 15b) vers ceux correspondants de la pluralité d'échangeurs de chaleur du côté utilisation (26a - 26d), et

mélanger, à travers la soupape de commutation de canal (22a - 22d, 23a - 23d), un flux du milieu thermique fourni à partir de l'un de la pluralité d'échangeurs de chaleur intermédiaires (15a, 15b) vers celui correspondant de la pluralité d'échangeurs de chaleur du côté utilisation (26a - 26d), avec un flux du milieu thermique fourni à partir d'un autre de la pluralité d'échangeurs de chaleur intermédiaires (15a, 15b) vers celui correspondant de la pluralité d'échangeurs de chaleur du côté utilisation (26a - 26d).

3. Appareil de climatisation selon la revendication 2, où

lorsque le résultat de la détection obtenu par le capteur de température (31a, 31b, 32a, 32b) est supérieur à la plage de températures, le dispositif de commande (100, 300) provoque le fonctionnement de l'un correspondant de la pluralité d'échangeurs de chaleur intermédiaires (15a, 15b) en tant qu'évaporateur, et refroidit le milieu thermique qui passe à travers celui correspondant de la pluralité d'échangeurs de chaleur intermédiaires (15a, 15b).

4. Appareil de climatisation selon la revendication 3, où

lorsque le résultat de la détection obtenu par le capteur de température (31a, 31b, 32a, 32b) un certain temps prédéterminé après avoir commandé le compresseur (10) et la pompe (21a, 21b), est supérieur à une température obtenue en ajoutant une constante anti-oscillation à une limite inférieure de la plage de températures, et n'est pas supérieur à une limite supérieure de la plage de températures, le dispositif de commande (100, 300) arrête le compresseur (10) et la pompe (21a, 21b).

5. Appareil de climatisation selon la revendication 2, où

lorsque le résultat de la détection obtenu par le capteur de température (31a, 31b, 32a, 32b) est inférieure à la plage de températures, le dispositif de commande provoque le fonctionnement de l'un correspondant de la pluralité d'échangeurs de chaleur intermédiaires (15a, 15b) en tant que radiateur, et chauffe le milieu thermique qui passe à travers celui correspondant de la pluralité d'échangeurs de chaleur intermédiaires (15a, 15b).

6. Appareil de climatisation selon la revendication 5, où

lorsque le résultat de la détection obtenu par le capteur de température (31a, 31b, 32a, 32b) un certain temps prédéterminé après avoir commandé le compresseur (10) et la pompe (21a, 21b), est inférieur à une température obtenue en soustrayant une constante anti-oscillation d'une limite supérieure de la plage de températures, et n'est pas inférieur à une limite inférieure de la plage de températures, le dispositif de commande (100, 300) arrête le compresseur (10) et la pompe (21a, 21b).

**7.** Appareil de climatisation selon l'une quelconque des revendications 2 à 6, où le dispositif de commande (100, 300) ouvre la soupape de commutation de canal (22a - 22d, 23a - 23d) afin de garantir un canal de circulation du milieu thermique avant ou en même temps que la commande de la pompe (21a, 21b), et

provoque la circulation du milieu thermique entre l'un au moins de la pluralité d'échangeurs de chaleur intermédiaires (15a, 15b) et celui correspondant de la pluralité d'échangeurs de chaleur du côté utilisation (26a - 26d).

**8.** Appareil de climatisation selon l'une quelconque des revendications 2 à 7, comprenant en outre :

un capteur de température de l'air extérieur configuré pour détecter la température de l'air extérieur, où
le dispositif de commande (100, 300)
calcule une température moyenne de l'air extérieur au cours d'une période de temps prédéterminée sur la base d'un résultat de détection obtenu par le capteur de température de l'air extérieur, et
détermine une limite supérieure et une limite inférieure de la plage de températures sur la base de la température moyenne calculée.

F I G. 1

F I G. 2

F I G. 3

F I G . 4

F I G. 5

FIG. 6

EP 2 908 070 B1

F I G. 7

28

FIG. 8

START

STEP1 — HAS PREDETERMINED TIME ELAPSED AFTER STOP OF COMPRESSOR AND PUMPS? — NO

YES

STEP2 — OPERATE ONLY PUMPS FOR PREDETERMINED TIME

STEP3 — $TL \leq Tw \leq TH?$ — YES

NO

STEP4 — $TH < Tw?$ — YES

NO

STEP5 — START OUTDOOR UNIT IN HEATING MODE

STEP9 — START OUTDOOR UNIT IN COOLING MODE

STEP6 — HAS PREDETERMINED TIME ELAPSED AFTER START? — NO

YES

STEP10 — HAS PREDETERMINED TIME ELAPSED AFTER START? — NO

YES

STEP7 — $TL + C < Tw?$ (C: ANTIHUNTING CONSTANT) — NO

YES

STEP11 — $Tw < TH - C?$ (C: ANTIHUNTING CONSTANT) — NO

YES

STEP8 — STOP OUTDOOR UNIT AND PUMPS

STEP12 — STOP OUTDOOR UNIT AND PUMPS

RETURN

FIG. 9

```
                          ( START )
                              │
STEP21 ─────┐    ┌───────────────────────┐
            │    │ RECORD OUTDOOR        │
            │    │ TEMPERATURE, INDOOR   │
            │    │ TEMPERATURE, AND      │
            │    │ WATER TEMPERATURE     │
            │    └───────────────────────┘
            │              │
STEP22 ──┐  │         HAS              NO
         │  │    PREDETERMINED TIME ─────────────────────────────┐
         │  │    ELAPSED AFTER STOP OF                           │
         │  │    COMPRESSOR AND                                  │
         │  │    PUMPS?                                          │
         │              │ YES                                    │
STEP23-1 ─┐       AVERAGE          NO                            │
          │  OUTDOOR TEMPERATURE ───────────────┐               │
          │    < 10 DEGREES C?                   │               │
          │              │                       │               │
          │              │ YES    STEP23-2 ┐   10 DEGREES C ≤    │
          │              │                 │  AVERAGE OUTDOOR  NO│
          │              │                 │  TEMPERATURE <  ─────
          │              │                 │  20 DEGREES C?      │
STEP24-1 ─┐              │        STEP24-2 ┐   │ YES  STEP24-3 ┐ │
          │              │                 │                   │ │
   ┌──────────────────────┐  ┌──────────────────┐ ┌──────────────────────┐
   │ SINCE WINTER IS      │  │ SINCE INTERMEDIATE│ │ SINCE SUMMER IS      │
   │ ASSUMED, HEATING     │  │ PERIOD IS ASSUMED,│ │ ASSUMED, COOLING     │
   │ OPERATION IS PREDICTED│  │ TARGET WATER      │ │ OPERATION IS         │
   │ TO BE PERFORMED NEXT,│  │ TEMPERATURE TWm IS│ │ PREDICTED TO BE      │
   │ AND TARGET WATER     │  │ SET AT 20 DEGREES C│ │ PERFORMED NEXT, AND  │
   │ TEMPERATURE TWm IS SET│  └──────────────────┘ │ TARGET WATER         │
   │ AT 30 DEGREES C      │                         │ TEMPERATURE TWm IS   │
   └──────────────────────┘                         │ SET AT 10 DEGREES C  │
                                                     └──────────────────────┘
```

STEP25 — OPERATE ONLY PUMPS FOR PREDETERMINED TIME

STEP26 — TLm ≤ Tw ≤ THm?   YES ──────────────────────────────→ (back to STEP22)

NO

STEP27 — THm < Tw?   YES ──────────────────────────────────┐

NO                                                          │

STEP28 — START OUTDOOR UNIT IN HEATING MODE          STEP32 — START OUTDOOR UNIT IN COOLING MODE

STEP29 — HAS PREDETERMINED TIME ELAPSED AFTER START?   NO          STEP33 — HAS PREDETERMINED TIME ELAPSED AFTER START?   NO

YES                                                          YES

STEP30 — TLm + C < Tw? (C: ANTIHUNTING CONSTANT)   NO          STEP34 — Tw < THm - C? (C: ANTIHUNTING CONSTANT)   NO

YES                                                          YES

STEP31 — STOP OUTDOOR UNIT AND PUMPS          STEP35 — STOP OUTDOOR UNIT AND PUMPS

( RETURN )

**EP 2 908 070 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20120131948 A1
- US 20110146339 A1
- JP 2003343936 A
- WO 2010050003 A1